# EUROPEAN PATENT APPLICATION

(11) **EP 4 443 832 A1**
(43) Date of publication of application: **09.10.2024**
(21) Application number: 22900389.2
(22) Date of filing: 25.11.2022
(51) Int. Cl.: H04L 41/0823, H04L 41/16

(54) **INFORMATION TRANSMISSION METHOD AND APPARATUS, AND COMMUNICATION DEVICE**

(30) Priority: 30.11.2021 CN 202111447089
(71) Applicant: Vivo Mobile Communication Co., Ltd., Dongguan, Guangdong 523863 (CN)
(72) Inventor: YANG, Ang, Dongguan, Guangdong 523863 (CN); SUN, Peng, Dongguan, Guangdong 523863 (CN)
(74) Representative: Lavoix
(86) International application number: PCT/CN2022/134307
(87) International publication number: WO 2023/098585

(57) **Abstract**

Disclosed are an information transmission method and apparatus, and a communication device, belonging to the technical field of communications. The information transmission method includes: A first communication device sends first information of an artificial intelligence (AI) model to a second communication device. The first information includes at least one of the following: operation time information of the AI model; whether an operation time of the AI model meets a preset requirement or not; complexity information of the AI model; and an allowed maximum complexity of the AI model on the premise of meeting requirements of a timeline.

## Description

### CROSS-REFERENCE TO RELATED APPLICATIONS

This application claims priority to Chinese Patent Application No. 202111447089.2 filed on November 30, 2021, which is incorporated herein by reference in its entirety.

### TECHNICAL FIELD

This application belongs to the technical field of communications, and more particularly relates to an information transmission method and apparatus, and a communication device.

### BACKGROUND

Artificial intelligence (Artificial Intelligence, AI) has been widely used in various fields at present. There are many ways to implement an AI model, for example, a neural network, a decision tree, a support vector machine, a Bayes classifier, and the like.

The neural network is taken as an example (but the specific type of the AI model is not limited). The neural network is composed of neurons. Parameters of the neural network are optimized by an optimization algorithm. The optimization algorithm is an algorithm that minimizes or maximizes an objective function (or a loss function). The objective function is a mathematical combination of model parameters and data. For example, data x and a corresponding label Y are given to construct a neural network model f (.). With the model, a predicted output f(x) may be obtained according to the input x, and a difference (f(x)-Y) between a predicted value and a real value may be calculated, which is the loss function. The purpose of the optimization algorithm is to find suitable parameters to minimize the value of the loss function. As the loss value is smaller, the model is closer to the real situation.

At present, the common optimization algorithms are basically error back propagation (error Back Propagation, BP)-based algorithms. The basic idea of the BP algorithm is that a learning process is composed of signal forward propagation and error back propagation. During the forward propagation, input samples are transmitted from an input layer, processed by hidden layers layer by layer, and then transmitted to an output layer. If an actual output of the output layer is inconsistent with an expected output, the process proceeds to the error back propagation. The error back propagation is to back-propagate output errors to the input layer by hidden layers layer by layer in some form, and distribute the errors to all units in the layers, so as to obtain an error signal of each unit of each layer, where the error signal is the basis for correcting a weight value of each unit. The weight adjustment process of each layer of the signal forward propagation and the error back propagation is carried out repeatedly. The process of constant weight adjustment is also the learning and training process of networks. This process is carried out until the errors of network output are reduced to an acceptable level, or until a preset number of learning is carried out.

However, due to different computing powers of different terminals and different complexities of different AI models, the problem that the complexity of an AI model used by a terminal or a network-side device is inappropriate is easily caused, thus affecting the performance of a communication system.

### SUMMARY

Embodiments of this application provide an information transmission method and apparatus, and a communication device, which can solve the problem that the complexity of an AI model used by a terminal or a network-side device in the related art is inappropriate.

According to a first aspect, an information transmission method is provided, including:

A first communication device sends first information of an artificial intelligence (AI) model to a second communication device, where the first information includes at least one of the following:
operation time information of the AI model;
whether an operation time of the AI model meets a preset requirement or not;
complexity information of the AI model; and
an allowed maximum complexity of the AI model on the premise of meeting requirements of a timeline.

According to a second aspect, an information transmission apparatus is provided. The apparatus is applied to a first communication device, and includes:
a sending module, configured to send first information of an artificial intelligence (AI) model to a second communication device, where the first information includes at least one of the following:
operation time information of the AI model;
whether an operation time of the AI model meets a preset requirement or not;
complexity information of the AI model; and
an allowed maximum complexity of the AI model on the premise of meeting requirements of a timeline.

According to a third aspect, a communication device is provided. The communication device includes a processor and a memory. The memory stores programs or instructions executable on the processor. The programs or instructions, when executed by the processor, implement the steps of the method as described in the first aspect.

According to a fourth aspect, a communication device is provided, including a processor and a communication interface. The processor is configured to determine first information of an AI model. The communication interface is configured to send the first information of the artificial intelligence (AI) model to a second communication device. The first information includes at least one of the following:
operation time information of the AI model;
whether an operation time of the AI model meets a preset requirement or not;
complexity information of the AI model; and
an allowed maximum complexity of the AI model on the premise of meeting requirements of a timeline.

According to a fifth aspect, a readable storage medium is provided. The readable storage medium stores programs or instructions. The programs or instructions, when executed by a processor, implement the steps of the method as described in the first aspect.

According to a sixth aspect, a chip is provided. The chip includes a processor and a communication interface. The communication interface is coupled to the processor. The processor is configured to execute programs or instructions to implement the steps of the method as described in the first aspect.

According to a seventh aspect, a computer program / program product is provided. The computer program / program product is stored in a storage medium. The computer program / program product is executed by at least one processor to implement the steps of the method as described in the first aspect.

In this embodiment of this application, a first communication device sends operation time related information and/or complexity related information of AI models to a second communication device, so that the first communication device and the second communication device can align operation times and complexities to determine an appropriate AI model, thereby improving the performance of the AI models in a communication system and further improving the system performance.

### BRIEF DESCRIPTION OF THE DRAWINGS

FIG. 1 shows a block diagram of a wireless communication system to which an embodiment of this application is applicable;
FIG. 2 shows a schematic diagram depicting steps of an information transmission method according to embodiments of this application;
FIG. 3 shows a schematic diagram depicting a structure of an information transmission apparatus according to embodiments of this application;
FIG. 4 shows a schematic diagram depicting a structure of a communication device according to embodiments of this application;
FIG. 5 shows a schematic diagram depicting a structure of a terminal according to embodiments of this application; and
FIG. 6 shows a schematic diagram depicting a structure of a network-side device according to embodiments of this application.

### DETAILED DESCRIPTION

The technical solutions in embodiments of this application are clearly and completely described below with reference to the accompanying drawings in the embodiments of this application. Apparently, the described embodiments are merely some rather than all of the embodiments of this application. All other embodiments obtained by those skilled in the art based on embodiments of this application fall within the protection scope of this application.

The terms "first", "second", and the like in the specification and claims of this application are used to distinguish similar objects and are not used to describe a particular order or priority. It should be understood that the terms so used are interchangeable where appropriate, whereby embodiments of this application can be practiced in an order other than those illustrated or described herein, and that the objects distinguished by "first" and "second" are generally one class and the number of objects is not limited. For example, there may be one or more first objects. Furthermore, "and/or" in the specification and claims represents at least one of the connected objects, and the character "/" generally represents that the associated objects are in an "or" relationship.

It is to be noted that the technologies described in the embodiments of this application are not limited to a long term evolution (Long Term Evolution, LTE)/LTE-advanced (LTE-Advanced, LTE-A) system, and may further be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in embodiments of this application are often used interchangeably, and the described techniques may be used for both the above-mentioned systems and radio technologies and for other systems and radio technologies. The following description describes a new radio (New Radio, NR) system for example purposes and uses the NR term in most of the following descriptions, but these technologies may also be applied to applications other than NR system applications, such as 6th generation (6th Generation, 6G) communication systems.

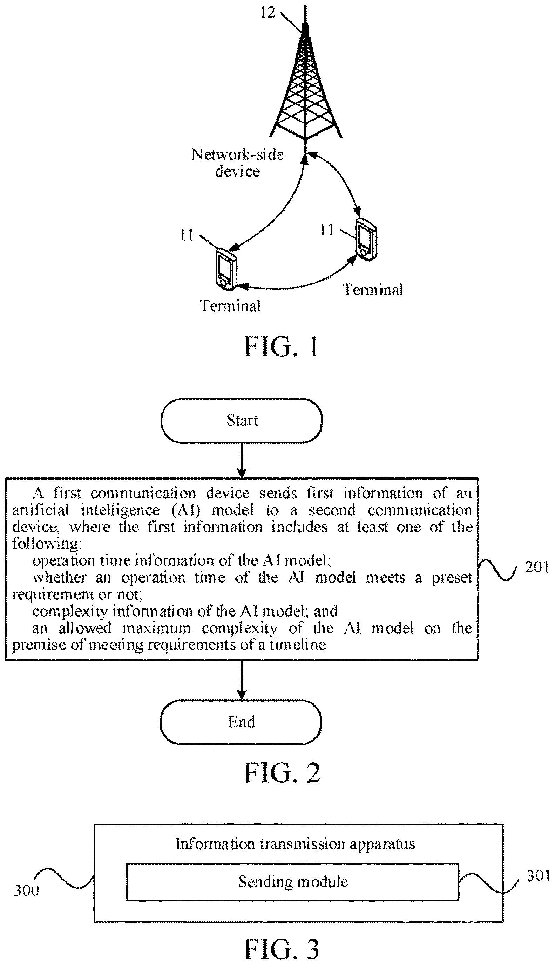

FIG. 1 shows a block diagram of a wireless communication system to which embodiments of this application are applicable. The wireless communication system includes a terminal 11 and a network-side device 12. The terminal 11 may be a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home (home equipment having a wireless communication function, such as a refrigerator, a TV set, a laundry machine or furniture), a game console, a personal computer (personal computer, PC), a teller machine or an automatic teller machine, or other terminal-side devices. The wearable device includes: smart watches, smart bands, smart headphones, smart glasses, smart jewelry (smart bracelets, smart chain bracelets, smart rings, smart necklaces, smart chain anklets, and the like), smart wristbands, smart clothing, and the like. It should be noted that the specific type of the terminal 11 is not limited in this embodiment of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a WiFi node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP), or some other suitable terms in the art. The base station is not limited to specific technical vocabulary, provided that the same technical effects are achieved. It should be noted that in this embodiment of this application, only a base station in an NR system is described as an example, but the specific type of the base station is not limited.

An information transmission method and apparatus, and a communication device provided by embodiments of this application are described below in detail through some embodiments and application scenarios thereof with reference to the drawings.

Reference is made to FIG. 2. FIG. 2 is a schematic diagram depicting steps of an information transmission method according to embodiments of this application. The information transmission method includes:

Step 201: A first communication device sends first information of an artificial intelligence (AI) model to a second communication device, where the first information includes at least one of the following:
operation time information of the AI model;
whether an operation time of the AI model meets a preset requirement or not, where optionally, an indication is sent in a case that the operation time of the AI model meets the preset requirement, or an indication is sent in a case that the operation time of the AI model does not meet the preset requirement, or an indication is sent regardless of whether the AI model meets the preset requirement or not;
complexity information of the AI model; and
an allowed maximum complexity of the AI model on the premise of meeting requirements of a timeline (timeline).

As an optional embodiment, the first communication device may be a network-side device or a terminal, and the second communication device may also be a network-side device or a terminal. For example, the first communication device is a network-side device, and the second communication device is a terminal. For another example, the first communication device is a terminal, and the second communication device is a network-side device.

Optionally, the AI model may be an AI model used by the first communication device or an AI model currently used by the first communication device.

In at least one embodiment of this application, the operation time of the AI model includes at least one of the following:
a first operation time of the AI model in an AI operation unit, which may also be referred to as an operation time of the AI model; and
a data transmission time, namely a data transmission time of related data processed by the AI model.

It should be noted that the AI operation unit is configured for operation or inference or operation or computation of the AI model, and may be a unit, module, a chip, or hardware. Specific limitations are omitted herein.

As an optional embodiment, the data transmission time includes at least one of the following:
a first time at which data is inputted from a first module to an input interface of the AI operation unit;
a second time at which the AI operation unit reads the data from the input interface;
a third time at which the AI operation unit outputs the data to an output interface;
a fourth time at which the data is outputted from the output interface to a second module; and
a fifth time at which the second module reads the data from an input interface of the second module.

The first module is a source module for inputting data, and the second module is a destination module for outputting data. The first module may be an AI operation unit or a non-AI operation unit. Alternatively, the second module may be an AI operation unit or a non-AI operation unit. Specific limitations are omitted herein.

Optionally, the non-AI operation unit is a unit, a module, a chip, or hardware for a non-AI function.

In at least one optional embodiment of this application, the complexity of the AI model includes any one of the following:
total operations of the AI model;
total computations of the AI model; and
total operations (Operation, OP) of the AI model.

In a case that the first communication device determines the complexity of the AI model, the method further includes at least one of the following:

All operations of the AI model are converted into OPs on the basis of an OP.

All operations of the AI model are converted into multiplications or additions on the basis of a multiplication or an addition.

A nonlinear function of the AI model is converted into OPs. For example, a common activation function ReLU is converted to three OPs.

A nonlinear function of the AI model is converted into multiplications or additions.

The "All operations of the AI model are converted into OPs on the basis of an OP" may be understood as: Generally, a multiplication or an addition is recorded as an OP. Definitely, it is also possible to agree that a multiplication or an addition is a plurality of OPs. At present, a general network processing unit (Network Processing Unit, NPU) uses floating-point operations per second (floating-point operations per second, FLOPS, namely floating-point operations executed per second) to express a computing power of the NPU or a graphics processing unit (Graphics Processing Unit, GPU). The floating-point operations include all operations involving decimals, which take more time than integer operations. Generally, TFLOPS (Tops) is commonly used as an index to measure the performance/computing power of the NPU/GPU. For example, the computing power of a HiSilicon 3519AV100 chip is 1.7 Tops. TFLOPS represents tera floating-point operations per second (teraFLOPS).

The "All operations of the AI model are converted into multiplications or additions on the basis of a multiplication or an addition" may be understood as: Although the complexity of a multiplication and the complexity of an addition are considered to be the same when measuring the complexity of the AI model and the capability of the NPU/GPU, the complexities of the multiplication and the addition may be different due to chip implementation and other factors. For example, an addition is recorded as one OP, and a multiplication is M OPs (M is a positive real number, for example, M=1.2).

Optionally, OPs or multiplications or additions converted from different nonlinear functions may be different. For example, OPs converted from ReLU are less than OPs converted from Sigmiod.

Optionally, OPs or multiplications or additions converted from the same nonlinear function may be different for different hardware.

In at least one embodiment of this application, the first communication device may include one AI model or a plurality of AI models. If the first communication device includes one AI model and the AI model has one operation time or one complexity, the operation time or complexity of the AI model in the first information sent by the first communication device is the operation time or complexity corresponding to this AI model.

In another optional embodiment of this application, the first communication device may include a plurality of operation times or a plurality of complexities. Scenarios where the first communication device includes a plurality of operation times or a plurality of complexities include:
Scenario 1: The first communication device includes a single AI model, and the single AI model has a plurality of operation times. For example, when the first communication device has a plurality of AI operation units, a single AI model has a plurality of operation times. For another example, when the first communication device needs to simplify AI models, a single AI model has a plurality of operation times. The simplifying AI models may be understood as: simplifying and thinning AI models under the condition of ensuring basically the same performance by using knowledge distillation, pruning, low rank approximation, quantification, and other modes. Definitely, the AI models may be more complex to improve performance.
Scenario 2: The first communication device includes a plurality of AI models belonging to the same function, and the plurality of AI models has a plurality of operation times. For example, for a certain function or communication module, the second communication device issues a plurality of AI models, or a plurality of AI models are agreed based on protocols, or the first communication device owns a plurality of AI models, or the number of AI models issued by the second communication device + agreed based on protocols + owned by the first communication device is more than 1.
Scenario 3: The first communication device includes a single AI model, and the single AI model has a plurality of complexities. For example, when the first communication device has a plurality of AI operation units, a single AI model has a plurality of complexities. For another example, when the first communication device needs to simplify AI models, a single AI model has a plurality of complexities. The simplifying AI models may be understood as: simplifying and thinning AI models under the condition of ensuring basically the same performance by using knowledge distillation, pruning, low rank approximation, quantification, and other modes. Definitely, the AI models may be more complex to improve performance.
Scenario 4: The first communication device includes a plurality of AI models belonging to the same function, and the plurality of AI models has a plurality of complexities. For example, for a certain function or communication module, the second communication device issues a plurality of AI models, or a plurality of AI models are agreed based on protocols, or the first communication device owns a plurality of AI models, or the number of AI models issued by the second communication device + agreed based on protocols + owned by the first communication device is more than 1.
Scenario 5: The first communication device includes a plurality of AI models belonging to different functions, and the plurality of AI models has a plurality of operation times.
Scenario 6: The first communication device includes a plurality of AI models belonging to different functions, and the plurality of AI models has a plurality of complexities.

As an optional embodiment, in Scenario 1 and Scenario 2, the operation time information of the AI model in the first information includes any one of the following:
all operation times;
K1 maximum operation times among the plurality of operation times;
K2 minimum operation times among the plurality of operation times;
K3 maximum operation times and K4 minimum operation times among the plurality of operation times;
an average of all operation times;
an average of K5 maximum operation times among the plurality of operation times;
an average of K6 minimum operation times among the plurality of operation times;
an average of K7 maximum operation times and K8 minimum operation times among the plurality of operation times; and
K9 operation times selected by the first communication device.

K1, K2, K3, K4, K5, K6, K7, K8, and K9 are integers greater than or equal to 1.

As an optional embodiment, in Scenario 3 and Scenario 4, the complexity information of the AI model in the first information includes any one of the following:
all complexities;
L1 maximum complexities among the plurality of complexities;
L2 minimum complexities among the plurality of complexities;
L3 maximum complexities and L4 minimum complexities among the plurality of complexities;
an average of all complexities;
an average of L5 maximum complexities among the plurality of complexities;
an average of L6 minimum complexities among the plurality of complexities;
an average of L7 maximum complexities and L8 minimum complexities among the plurality of complexities; and
L9 complexities selected by the first communication device.

L1, L2, L3, L4, L5, L6, L7, L8, and L9 are integers greater than or equal to 1.

As another optional embodiment, in Scenario 5 and Scenario 6, in a case that the first communication device includes a plurality of AI models belonging to different functions:

The operation time information of the AI model in the first information includes: a joint operation time of the plurality of AI models, where the joint operation time includes: a sum of operation times of the AI model. The operation time of one AI model may be understood as an individual operation time of the AI model.

The complexity information of the AI model in the first information includes: a joint complexity of the plurality of AI models, where the joint complexity includes: a sum of complexities of the AI model.

In at least one embodiment of this application, in a case that a joint operation of the plurality of AI models includes a non-AI operation unit, the joint operation time further includes:
a run time of the non-AI operation unit.

The run time of the non-AI operation unit includes at least one of the following:
a sixth time at which data is inputted from a third module to an input interface of the non-AI operation unit;
a seventh time at which the non-AI operation unit reads the data from the input interface;
an eighth time at which the non-AI operation unit outputs the data to an output interface;
a ninth time at which the data is outputted from the output interface to a fourth module; and
a tenth time at which the fourth module reads the data from an input interface of the fourth module.

In at least one optional embodiment of this application, in a case that the number of AI operation units corresponding to the plurality of AI models is less than that of the AI models, the joint operation time is obtained by: subtracting the data transmission time of at least one AI model from the sum of the operation times of the plurality of AI models.

Optionally, "the sum of the operation times of the plurality of AI models" may be understood as the sum of individual operation times of the AI models.

For example, when N1 AI models correspond to N2 AI operation units, if N1>N2, the overall data transmission time may be reduced, and the joint operation time may be reduced. For example, the data transmission times of (N1-N2) single AI models may be reduced.

In an optional embodiment of this application, the method further includes:

The first communication device determines the AI model according to AI model indication information sent by the second communication device.

Or:
The first communication device determines the AI model according to a protocol agreement.

Or:
The first communication device determines the AI model according to customization of the first communication device.

In another optional embodiment of this application, the method further includes:

The first communication device determines the timeline (timeline) according to timeline indication information sent by the second communication device.

Or:
The first communication device determines the timeline according to a protocol agreement.

Or:
The first communication device determines the timeline according to customization of the first communication device.

In other words, the AI model or timeline at the first communication device is: sent by the second communication device, defaulted by protocols, or owned or customized by the first communication device.

To sum up, in this embodiment of this application, a first communication device sends operation time related information and/or complexity related information of AI models to a second communication device, so that the first communication device and the second communication device can align operation times and complexities to determine an appropriate AI model, thereby improving the performance of the AI models in a communication system and further improving the system performance.

The execution entity of the information transmission method provided by this embodiment of this application may be an information transmission apparatus. In this embodiment of this application, the information transmission apparatus provided by this embodiment of this application is explained with an example where the information transmission apparatus performs the information transmission method.

Reference is made to FIG. 3. FIG. 3 is a schematic diagram depicting a structure of an information transmission apparatus 300 according to embodiments of this application.

The information transmission apparatus 300 is applied to a first communication device, and includes:
a sending module 301, configured to send first information of an artificial intelligence (AI) model to a second communication device, where the first information includes at least one of the following:
operation time information of the AI model;
whether an operation time of the AI model meets a preset requirement or not;
complexity information of the AI model; and
an allowed maximum complexity of the AI model on the premise of meeting requirements of a timeline.

As an optional embodiment, the operation time of the AI model includes at least one of the following:
a first operation time of the AI model in an AI operation unit; and
a data transmission time.

As an optional embodiment, the data transmission time includes at least one of the following:
a first time at which data is inputted from a first module to an input interface of the AI operation unit;
a second time at which the AI operation unit reads the data from the input interface;
a third time at which the AI operation unit outputs the data to an output interface;
a fourth time at which the data is outputted from the output interface to a second module; and
a fifth time at which the second module reads the data from an input interface of the second module.

As an optional embodiment, the complexity of the AI model includes any one of the following:
total operations of the AI model;
total computations of the AI model; and
total operations (OP) of the AI model.
As an optional embodiment, the apparatus further includes:
a conversion module, configured to perform at least one of the following:
converting all operations of the AI model into OPs on the basis of an OP;
converting all operations of the AI model into multiplications or additions on the basis of a multiplication or an addition;
converting a nonlinear function of the AI model into OPs; and
converting a nonlinear function of the AI model into multiplications or additions.

As an optional embodiment, in a case that the first communication device includes a single AI model and the single AI model has a plurality of operation times, or in a case that the first communication device includes a plurality of AI models belonging to the same function and the plurality of AI models has a plurality of operation times, the operation time information of the AI model in the first information includes any one of the following:
all operation times;
K1 maximum operation times among the plurality of operation times;
K2 minimum operation times among the plurality of operation times;
K3 maximum operation times and K4 minimum operation times among the plurality of operation times;
an average of all operation times;
an average of K5 maximum operation times among the plurality of operation times;
an average of K6 minimum operation times among the plurality of operation times;
an average of K7 maximum operation times and K8 minimum operation times among the plurality of operation times; and
K9 operation times selected by the first communication device.

K1, K2, K3, K4, K5, K6, K7, K8, and K9 are integers greater than or equal to 1.

As an optional embodiment, in a case that the first communication device includes a single AI model and the single AI model has a plurality of complexities, or in a case that the first communication device includes a plurality of AI models belonging to the same function and the plurality of AI models has a plurality of complexities, the complexity information of the AI model in the first information includes any one of the following:
all complexities;
L1 maximum complexities among the plurality of complexities;
L2 minimum complexities among the plurality of complexities;
L3 maximum complexities and L4 minimum complexities among the plurality of complexities;
an average of all complexities;
an average of L5 maximum complexities among the plurality of complexities;
an average of L6 minimum complexities among the plurality of complexities;
an average of L7 maximum complexities and L8 minimum complexities among the plurality of complexities; and
L9 complexities selected by the first communication device.

L1, L2, L3, L4, L5, L6, L7, L8, and L9 are integers greater than or equal to 1.

As an optional embodiment, in a case that the first communication device includes a plurality of AI models belonging to different functions:

The operation time information of the AI model in the first information includes: a joint operation time of the plurality of AI models, where the joint operation time includes: a sum of operation times of the AI model.

The complexity information of the AI model in the first information includes: a joint complexity of the plurality of AI models, where the joint complexity includes: a sum of complexities of the AI model.

As an optional embodiment, in a case that a joint operation of the plurality of AI models includes a non-AI operation unit, the joint operation time further includes:
a run time of the non-AI operation unit.

As an optional embodiment, the run time of the non-AI operation unit includes at least one of the following:
a sixth time at which data is inputted from a third module to an input interface of the non-AI operation unit;
a seventh time at which the non-AI operation unit reads the data from the input interface;
an eighth time at which the non-AI operation unit outputs the data to an output interface;
a ninth time at which the data is outputted from the output interface to a fourth module; and
a tenth time at which the fourth module reads the data from an input interface of the fourth module.

As an optional embodiment, in a case that the number of AI operation units corresponding to the plurality of AI models is less than that of the AI models, the joint operation time is obtained by: subtracting the data transmission time of at least one AI model from the sum of the operation times of the plurality of AI models.

As an optional embodiment, the apparatus further includes:
a first determination module, configured to: determine the AI model according to AI model indication information sent by the second communication device;
or, determine the AI model according to a protocol agreement;
or, determine the AI model according to customization of the first communication device.

As an optional embodiment, the apparatus further includes:
a second determination module, configured to: determine the timeline according to timeline indication information sent by the second communication device;
or, determine the timeline according to a protocol agreement;
or, determine the timeline according to customization of the first communication device.

In this embodiment of this application, a first communication device sends operation time related information and/or complexity related information of AI models to a second communication device, so that the first communication device and the second communication device can align operation times and complexities to determine an appropriate AI model, thereby improving the performance of the AI models in a communication system and further improving the system performance.

It should be noted that the information transmission apparatus provided by this embodiment of this application is an apparatus capable of performing the information transmission method, and all the embodiments of the information transmission method are applicable to the apparatus and can achieve the same or similar beneficial effects.

The information transmission apparatus in this embodiment of this application may be an electronic device such as an electronic device having an operating system, or may be a component in an electronic device such as an integrated circuit or a chip. The electronic device may be a terminal or another device other than the terminal. Exemplarily, the terminal may include, but is not limited to, the type of the terminal 11 listed above, and the another device may be a server, a network attached storage (Network Attached Storage, NAS), or the like. This embodiment of this application is not specifically limited.

The information transmission apparatus provided by this embodiment of this application can implement various processes in the method embodiments shown in FIG. 1 to FIG. 2, and the same technical effects can be achieved. To avoid repetition, details are omitted herein.

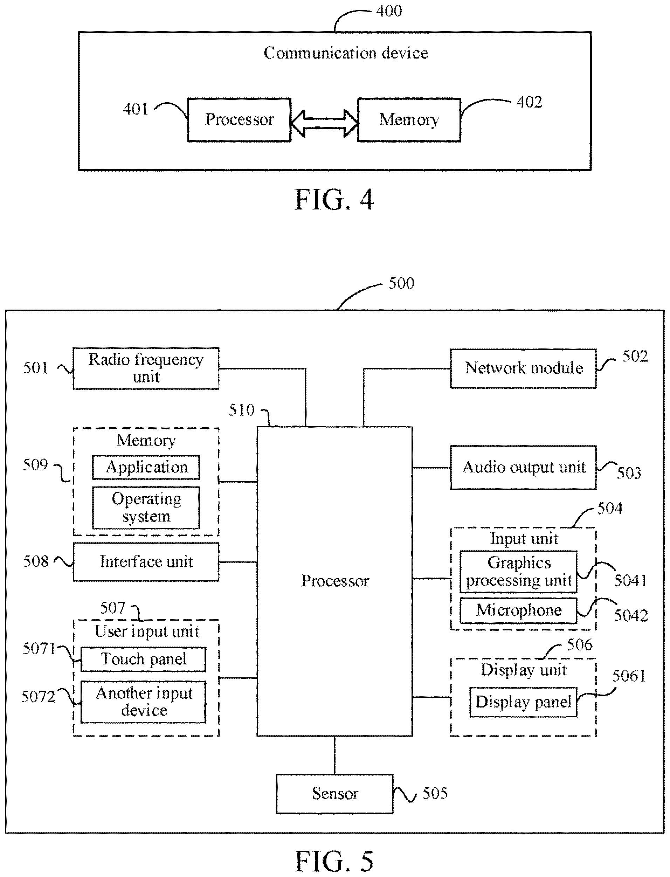

Optionally, as shown in FIG. 4, embodiments of this application further provide a communication device 400. The communication device is a first communication device, including a processor 401 and a memory 402. The memory 402 stores programs or instructions executable on the processor 401. For example, when the communication device 400 is a terminal, the programs or instructions, when executed by the processor 401, implement various steps of the embodiments of the information transmission method, and the same technical effects can be achieved. When the communication device 400 is a network-side device, the programs or instructions, when executed by the processor 401, implement various steps of the embodiments of the information transmission method, and the same technical effects can be achieved. To avoid repetition, details are omitted herein.

Embodiments of this application further provide a terminal, including a processor and a communication interface. The communication interface is configured to send first information of an artificial intelligence (AI) model to a second communication device. The first information includes at least one of the following: operation time information of the AI model; whether an operation time of the AI model meets a preset requirement or not; complexity information of the AI model; and an allowed maximum complexity of the AI model on the premise of meeting requirements of a timeline. The terminal embodiments correspond to the foregoing terminal-side method embodiments. Each implementation process and implementation mode of the foregoing method embodiments may be applied to the terminal embodiments, and can achieve the same technical effect. Specifically, FIG. 5 is a schematic diagram depicting a hardware structure of a terminal according to embodiments of this application.

The terminal 500 includes, but is not limited to, at least some components such as a radio frequency unit 501, a network module 502, an audio output unit 503, an input unit 504, a sensor 505, a display unit 506, a user input unit 507, an interface unit 508, a memory 509, and a processor 510.

It will be appreciated by those skilled in the art that the terminal 500 may further include a power supply (such as a battery) for supplying power to the components. The power supply may be logically connected to the processor 510 by a power management system, thereby implementing functions such as charging, discharging, and power consumption management by using the power management system. The terminal structure shown in FIG. 5 does not constitute a limitation on the terminal, and the terminal may include more or fewer components than shown, or combine some components, or have different component arrangements. Details are omitted herein.

It will be understood that in this embodiment of this application, the input unit 504 may include a graphics processing unit (Graphics Processing Unit, GPU) 5041 and a microphone 5042. The graphics processing unit 5041 performs processing on image data of a static picture or a video that is obtained by an image capture apparatus (for example, a camera) in a video capture mode or an image capture mode. The display unit 506 may include a display panel 5061. The display panel 5061 may be configured by using a liquid crystal display, an organic light-emitting diode, or the like. The user input unit 507 includes at least one of a touch panel 5071 and another input device 5072. The touch panel 5071 may also be referred to as a touch screen. The touch panel 5071 may include two parts: a touch detection apparatus and a touch controller. The another input device 5072 may include, but is not limited to, a physical keyboard, a functional key (such as a volume control key or a switch key), a track ball, a mouse, and a joystick. Details are omitted herein.

In this embodiment of this application, the radio frequency unit 501 receives downlink data from a network-side device and may then transmit the downlink data to the processor 510 for processing. In addition, the radio frequency unit 501 may send uplink data to the network-side device. Generally, the radio frequency unit 501 includes, but is not limited to, an antenna, an amplifier, a transceiver, a coupler, a low noise amplifier, a duplexer, and the like.

The memory 509 may be configured to store software programs or instructions and various data. The memory 509 may mainly include a first storage area for storing programs or instructions and a second storage area for storing data. The first storage area may store an operating system, an application or instruction required by at least one function (such as a sound playback function and an image display function), and the like. Furthermore, the memory 509 may include a volatile memory or a non-volatile memory, or the memory 509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 509 in this embodiment of this application includes, but is not limited to, these memories and any other suitable types of memories.

The processor 510 may include one or more processing units. Optionally, the processor 510 integrates an application processor and a modem processor. The application processor mainly processes operations involving an operating system, a user interface, and an application. The modem processor such as a baseband processor mainly processes wireless communication signals. It will be understood that the foregoing modem may either not be integrated into the processor 510.

The radio frequency unit 501 is configured to send first information of an artificial intelligence (AI) model to a second communication device. The first information includes at least one of the following:
operation time information of the AI model;
whether an operation time of the AI model meets a preset requirement or not;
complexity information of the AI model; and
an allowed maximum complexity of the AI model on the premise of meeting requirements of a timeline.

In this embodiment of this application, a terminal sends operation time related information and/or complexity related information of AI models to a second communication device, so that the terminal and the second communication device can align operation times and complexities to determine an appropriate AI model, thereby improving the performance of the AI models in a communication system and further improving the system performance.

It should be noted that the information transmission apparatus provided by this embodiment of this application is an apparatus capable of performing the information transmission method, and all the embodiments of the information transmission method are applicable to the apparatus and can achieve the same or similar beneficial effects.

Embodiments of this application further provide a network-side device, including a processor and a communication interface. The communication interface is configured to send first information of an artificial intelligence (AI) model to a second communication device. The first information includes at least one of the following: operation time information of the AI model; whether an operation time of the AI model meets a preset requirement or not; complexity information of the AI model; and an allowed maximum complexity of the AI model on the premise of meeting requirements of a timeline. The network-side device embodiments correspond to the foregoing network-side device method embodiments. Each implementation process and implementation mode of the foregoing method embodiments may be applied to the network-side device embodiments, and the same technical effects can be achieved.

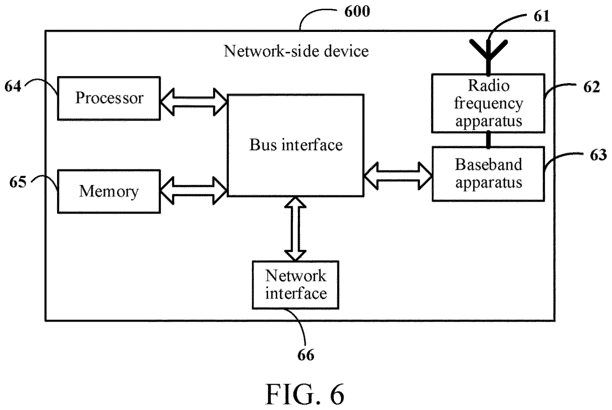

Specifically, embodiments of this application further provide a network-side device. As shown in FIG. 6, a network-side device 600 includes: an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information through the antenna 61 and sends the received information to the baseband apparatus 63 for processing. In a downlink direction, the baseband apparatus 63 processes information to be sent and sends the information to the radio frequency apparatus 62. The radio frequency apparatus 62 processes the received information and sends the information via the antenna 61.

The method performed by the network-side device in the above embodiments may be implemented in the baseband apparatus 63. The baseband apparatus 63 includes a baseband processor.

The baseband apparatus 63 may, for example, include at least one baseband board. The baseband board is provided with a plurality of chips. As shown in FIG. 6, one of the chips is, for example, the baseband processor, connected to the memory 65 through a bus interface to invoke programs in the memory 65 to perform a network device operation shown in the above method embodiments.

The network-side device may further include a network interface 66. The interface is, for example, a common public radio interface (common public radio interface, CPRI).

Specifically, the network-side device 600 in this embodiment of the present disclosure further includes: instructions or programs stored in the memory 65 and executable on the processor 64. The processor 64 invokes the instructions or programs in the memory 65 to implement the method performed by each module shown in FIG. 3, and the same technical effects can be achieved. To avoid repetition, details are omitted herein.

Embodiments of this application further provide a readable storage medium. The readable storage medium may be non-volatile or volatile. The readable storage medium stores programs or instructions. The programs or instructions, when executed by a processor, implement various processes of the embodiments of the information transmission method, and the same technical effects can be achieved. To avoid repetition, details are omitted herein.

The processor is a processor in the terminal described in the foregoing embodiments. The readable storage medium includes a computer-readable storage medium, such as a computer read-only memory (ROM), a random access memory (RAM), a magnetic disk, an optical disc, or the like.

Embodiments of this application additionally provide a chip. The chip includes a processor and a communication interface. The communication interface is coupled to the processor. The processor is configured to execute programs or instructions, which implement various processes of the embodiments of the information transmission method, and the same technical effects can be achieved. To avoid repetition, details are omitted herein.

It should be understood that the chip referred to in this embodiment of this application may also be referred to as a system-on-chip, a system chip, a chip system, a system-on-a-chip, or the like.

Embodiments of this application additionally provide a computer program / program product. The computer program / program product is stored in a storage medium. The computer program / program product is executed by at least one processor to implement various processes of the embodiments of the information transmission method, and the same technical effects can be achieved. To avoid repetition, details are omitted herein.

It should be noted that the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. Furthermore, it should be noted that the scope of the method and apparatus in the implementations of this application is not limited to performing functions in the order shown or discussed, but may also include performing functions in a substantially simultaneous manner or in reverse order depending on the functions involved. For example, the described methods may be performed in a different order than described, and various steps may be added, omitted, or combined. In addition, features described with reference to some examples may be combined in other examples.

According to the descriptions in the above implementations, those skilled in the art may clearly learn that the method according to the foregoing embodiment may be implemented by relying on software and a necessary common hardware platform, and may be definitely implemented by hardware. However, in many cases, the former is a preferred implementation. Based on such an understanding, the technical solution of this application, either inherently or in any part contributing to the related art, may be embodied in the form of a computer software product. The computer software product is stored in a storage medium (such as a ROM/RAM, a magnetic disk, and an optical disc), and includes a plurality of instructions for enabling a terminal (which may be a mobile phone, a computer, a server, an air conditioner, or a network device) to perform the method according to the various embodiments of this application.

Embodiments of this application have been described above with reference to the accompanying drawings. However, this application is not limited to the specific implementations described above, and the specific implementations described above are merely exemplary and not limitative. Those of ordinary skill in the art may make various variations under the teaching of this application without departing from the spirit of this application and the protection scope of the claims, and such variations all fall within the protection scope of this application.

## Claims

1. An information transmission method, comprising:
sending, by a first communication device, first information of an artificial intelligence (AI) model to a second communication device, wherein the first information comprises at least one of the following:
operation time information of the AI model;
whether an operation time of the AI model meets a preset requirement or not;
complexity information of the AI model; and
an allowed maximum complexity of the AI model on the premise of meeting requirements of a timeline.

2. The method according to claim 1, wherein the operation time of the AI model comprises at least one of the following:
a first operation time of the AI model in an AI operation unit; and
a data transmission time.

3. The method according to claim 2, wherein the data transmission time comprises at least one of the following:
a first time at which data is inputted from a first module to an input interface of the AI operation unit;
a second time at which the AI operation unit reads the data from the input interface;
a third time at which the AI operation unit outputs the data to an output interface;
a fourth time at which the data is outputted from the output interface to a second module; and
a fifth time at which the second module reads the data from an input interface of the second module.

4. The method according to claim 1, wherein the complexity of the AI model comprises any one of the following:
total operations of the AI model;
total computations of the AI model; and
total operations (OP) of the AI model.

5. The method according to claim 4, wherein the method further comprises at least one of the following:
converting all operations of the AI model into OPs on the basis of an OP;
converting all operations of the AI model into multiplications or additions on the basis of a multiplication or an addition;
converting a nonlinear function of the AI model into OPs; and
converting a nonlinear function of the AI model into multiplications or additions.

6. The method according to claim 1, wherein in a case that the first communication device comprises a single AI model and the single AI model has a plurality of operation times, or in a case that the first communication device comprises a plurality of AI models belonging to the same function and the plurality of AI models has a plurality of operation times, the operation time information of the AI model in the first information comprises any one of the following:
all operation times;
K1 maximum operation times among the plurality of operation times;
K2 minimum operation times among the plurality of operation times;
K3 maximum operation times and K4 minimum operation times among the plurality of operation times;
an average of all operation times;
an average of K5 maximum operation times among the plurality of operation times;
an average of K6 minimum operation times among the plurality of operation times;
an average of K7 maximum operation times and K8 minimum operation times among the plurality of operation times; and
K9 operation times selected by the first communication device,
wherein K1, K2, K3, K4, K5, K6, K7, K8, and K9 are integers greater than or equal to 1.

7. The method according to claim 1, wherein in a case that the first communication device comprises a single AI model and the single AI model has a plurality of complexities, or in a case that the first communication device comprises a plurality of AI models belonging to the same function and the plurality of AI models has a plurality of complexities, the complexity information of the AI model in the first information comprises any one of the following:
all complexities;
L1 maximum complexities among the plurality of complexities;
L2 minimum complexities among the plurality of complexities;
L3 maximum complexities and L4 minimum complexities among the plurality of complexities;
an average of all complexities;
an average of L5 maximum complexities among the plurality of complexities;
an average of L6 minimum complexities among the plurality of complexities;
an average of L7 maximum complexities and L8 minimum complexities among the plurality of complexities; and
L9 complexities selected by the first communication device,
wherein L1, L2, L3, L4, L5, L6, L7, L8, and L9 are integers greater than or equal to 1.

8. The method according to claim 1, wherein in a case that the first communication device comprises a plurality of AI models belonging to different functions,
the operation time information of the AI model in the first information comprises: a joint operation time of the plurality of AI models, wherein the joint operation time comprises: a sum of operation times of the AI model; and
the complexity information of the AI model in the first information comprises: a joint complexity of the plurality of AI models, wherein the joint complexity comprises: a sum of complexities of the AI model.

9. The method according to claim 8, wherein in a case that a joint operation of the plurality of AI models comprises a non-AI operation unit, the joint operation time further comprises:
a run time of the non-AI operation unit.

10. The method according to claim 9, wherein the run time of the non-AI operation unit comprises at least one of the following:
a sixth time at which data is inputted from a third module to an input interface of the non-AI operation unit;
a seventh time at which the non-AI operation unit reads the data from the input interface;
an eighth time at which the non-AI operation unit outputs the data to an output interface;
a ninth time at which the data is outputted from the output interface to a fourth module; and
a tenth time at which the fourth module reads the data from an input interface of the fourth module.

11. The method according to claim 8, wherein in a case that the number of AI operation units corresponding to the plurality of AI models is less than that of the AI models, the joint operation time is obtained by: subtracting the data transmission time of at least one AI model from the sum of the operation times of the plurality of AI models.

12. The method according to claim 1, wherein the method further comprises:
determining, by the first communication device, the AI model according to AI model indication information sent by the second communication device;
or,
determining, by the first communication device, the AI model according to a protocol agreement; or,
determining, by the first communication device, the AI model according to customization of the first communication device.

13. The method according to claim 1, wherein the method further comprises:
determining, by the first communication device, the timeline according to timeline indication information sent by the second communication device;
or,
determining, by the first communication device, the timeline according to a protocol agreement;
or,
determining, by the first communication device, the timeline according to customization of the first communication device.

14. An information transmission apparatus, applied to a first communication device, the apparatus comprising:
a sending module, configured to send first information of an artificial intelligence (AI) model to a second communication device, wherein the first information comprises at least one of the following:
operation time information of the AI model;
whether an operation time of the AI model meets a preset requirement or not;
complexity information of the AI model; and
an allowed maximum complexity of the AI model on the premise of meeting requirements of a timeline.

15. The apparatus according to claim 14, wherein the operation time of the AI model comprises at least one of the following:
a first operation time of the AI model in an AI operation unit; and
a data transmission time.

16. The apparatus according to claim 15, wherein the data transmission time comprises at least one of the following:
a first time at which data is inputted from a first module to an input interface of the AI operation unit;
a second time at which the AI operation unit reads the data from the input interface;
a third time at which the AI operation unit outputs the data to an output interface;
a fourth time at which the data is outputted from the output interface to a second module; and
a fifth time at which the second module reads the data from an input interface of the second module.

17. The apparatus according to claim 14, wherein the complexity of the AI model comprises any one of the following:
total operations of the AI model;
total computations of the AI model; and
total operations (OP) of the AI model.

18. The apparatus according to claim 17, wherein the apparatus further comprises:
a conversion module, configured to perform at least one of the following:
converting all operations of the AI model into OPs on the basis of an OP;
converting all operations of the AI model into multiplications or additions on the basis of a multiplication or an addition;
converting a nonlinear function of the AI model into OPs; and
converting a nonlinear function of the AI model into multiplications or additions.

19. The apparatus according to claim 14, wherein in a case that the first communication device comprises a single AI model and the single AI model has a plurality of operation times, or in a case that the first communication device comprises a plurality of AI models belonging to the same function and the plurality of AI models has a plurality of operation times, the operation time information of the AI model in the first information comprises any one of the following:
all operation times;
K1 maximum operation times among the plurality of operation times;
K2 minimum operation times among the plurality of operation times;
K3 maximum operation times and K4 minimum operation times among the plurality of operation times;
an average of all operation times;
an average of K5 maximum operation times among the plurality of operation times;
an average of K6 minimum operation times among the plurality of operation times;
an average of K7 maximum operation times and K8 minimum operation times among the plurality of operation times; and
K9 operation times selected by the first communication device,
wherein K1, K2, K3, K4, K5, K6, K7, K8, and K9 are integers greater than or equal to 1.

20. The apparatus according to claim 14, wherein in a case that the first communication device comprises a single AI model and the single AI model has a plurality of complexities, or in a case that the first communication device comprises a plurality of AI models belonging to the same function and the plurality of AI models has a plurality of complexities, the complexity information of the AI model in the first information comprises any one of the following:
all complexities;
L1 maximum complexities among the plurality of complexities;
L2 minimum complexities among the plurality of complexities;
L3 maximum complexities and L4 minimum complexities among the plurality of complexities;
an average of all complexities;
an average of L5 maximum complexities among the plurality of complexities;
an average of L6 minimum complexities among the plurality of complexities;
an average of L7 maximum complexities and L8 minimum complexities among the plurality of complexities; and
L9 complexities selected by the first communication device,
wherein L1, L2, L3, L4, L5, L6, L7, L8, and L9 are integers greater than or equal to 1.

21. The apparatus according to claim 14, wherein in a case that the first communication device comprises a plurality of AI models belonging to different functions,
the operation time information of the AI model in the first information comprises: a joint operation time of the plurality of AI models, wherein the joint operation time comprises: a sum of operation times of the AI model; and
the complexity information of the AI model in the first information comprises: a joint complexity of the plurality of AI models, wherein the joint complexity comprises: a sum of complexities of the AI model.

22. The apparatus according to claim 21, wherein in a case that a joint operation of the plurality of AI models comprises a non-AI operation unit, the joint operation time further comprises:
a run time of the non-AI operation unit.

23. The apparatus according to claim 22, wherein the run time of the non-AI operation unit comprises at least one of the following:
a sixth time at which data is inputted from a third module to an input interface of the non-AI operation unit;
a seventh time at which the non-AI operation unit reads the data from the input interface;
an eighth time at which the non-AI operation unit outputs the data to an output interface;
a ninth time at which the data is outputted from the output interface to a fourth module; and
a tenth time at which the fourth module reads the data from an input interface of the fourth module.

24. The apparatus according to claim 21, wherein in a case that the number of AI operation units corresponding to the plurality of AI models is less than that of the AI models, the joint operation time is obtained by: subtracting the data transmission time of at least one AI model from the sum of the operation times of the plurality of AI models.

25. The apparatus according to claim 14, wherein the apparatus further comprises:
a first determination module, configured to: determine the AI model according to AI model indication information sent by the second communication device;
or, determine the AI model according to a protocol agreement;
or, determine the AI model according to customization of the first communication device.

26. The apparatus according to claim 14, wherein the apparatus further comprises:
a second determination module, configured to: determine the timeline according to timeline indication information sent by the second communication device;
or, determine the timeline according to a protocol agreement;
or, determine the timeline according to customization of the first communication device.

27. A communication device, comprising a processor and a memory, wherein the memory stores programs or instructions executable on the processor, and the programs or instructions, when executed by the processor, implement the steps of the information transmission method according to any one of claims 1 to 13.

28. A readable storage medium, storing programs or instructions, wherein the programs or instructions, when executed by a processor, implement the steps of the information transmission method according to any one of claims 1 to 13.
